# EUROPEAN PATENT APPLICATION

(11) **EP 2 486 781 A1**
(43) Date of publication of application: **15.08.2012**
(21) Application number: 12154034.8
(22) Date of filing: 06.02.2012
(51) Int. Cl.: A01B 49/04, A01C 7/02, A01C 7/04, A01C 19/02

(54) **Compact self-propelled seeder**

(30) Priority: 10.02.2011 IT PN20110007
(71) Applicant: Matermacc S.p.A., 33078 San Vito al Tagliamento (PN) (IT)
(72) Inventor: Fiorido, Antonino, 33078 San Vito al Tagliamento (PN) (IT)
(74) Representative: Gonella, Mario

(57) **Abstract**

The present invention refers to a self-propelled sowing machine (1), steered by a user standing on the ground, comprising a frame (2) to which are connected at least one front wheel (3A) and at least one rear wheel (3B) that allow its movement in the direction of travel (A) controlled through manoeuvring means (5), and a pneumatic precision seeding device (50) mounted on the frame (2) and comprising a rotating perforated disk interposed between a seed container (11) and a case (12) defining a suction chamber, and cooperating on one hand with an air suction device (20) and on the other with a selector suitable to select individual seeds that are released into at least one discharge chute (8) for laying the seeds on the ground. The sowing machine includes a single drive means (4) fastened on said frame (2) that transfers the movement to said at least one front wheel (3A) through a first transmission unit (14) and to the air suction device (20) through a second transmission unit (24) separate from said first transmission unit (14).

## Description

### TECHNICAL FIELD OF INVENTION

The present invention refers to a compact, hand-driven self-propelled sowing machine or seeder, suitable to be used in the precision sowing of monogerm seeds, such as corn, sweet corn, beans, carrots, asparagus, onions, etc.

### BACKGROUND OF THE INVENTION

Sowing machines have long been used in farming for sowing seeds on soils suitably prepared beforehand.

Sowing machines are of various types, based on the manner of deposition of the seed: thus there are broadcast seeders, suitable for the scattered sowing of small seeds and fodder plant seeds, and precision seeders, suitable also for sowing vegetable seeds, designed to position seeds one by one, at regular intervals, along one or more parallel rows.

Sowing machines can also be classified according to the mechanical or pneumatic operation of the seed distribution devices.

Patent document EP0536543 by the same applicant discloses a precision sowing machine of pneumatic type in which the extraction of the seeds from the charging hopper, their separation and individual distribution are achieved by means of a rotating perforated disk that cooperates on one hand with a suction fan, which creates a vacuum through the perforations on the disk and holds the seeds that cling to the disk as far as a release zone, and on the other hand with a mechanical selector, which facilitates the selection of an individual seed and the return into the container of the seeds drawn up in excess.

Generally, for large tracts of land, sowing machines of the type described above are arranged in series and pulled by agricultural machines that, in a single pass, open a sowing furrow, distribute the seeds therein, close the furrow and partially tamp the soil around the seed. In these machines, the pneumatic apparatus is operated by means of the engines driving the agricultural machine, while the mechanical movement of the seed distributors is provided by wheels running on the ground, so as to have a constant spacing of the seeds even as the speed of the machine varies.

Engine-driven sowing machines of this type are not, however, suitable for sowing vegetable seeds in small plots of land or in closed spaces, such as, for example, greenhouses. For this reason, compact mechanical sowing machines can be found on the market, very often for single row seeding, of the type pushed by hand by an operator standing on the ground. These machines consist in general of a frame supported on a front wheel and on a rear wheel that transmit their motion to the mechanical seed deposition devices through a transmission unit consisting of gear wheels and a drive chain or of pulleys and a drive belt.

The use of these sowing machines would also be appropriate and desirable for all those cases in which there are problems of movement for large sowing machines consisting of a number of elements for seeding more rows at the same time, as for example on sloping or difficult to access fields, or also for finishing the work of larger sowing machines, or to reseed small tracts of land on fields where there are voids caused by parasites or by negative climatic conditions. However, the fact that said sowing machines are pushed forward by hand by the operator makes some operations particularly arduous and tiring, especially if a prolonged use of the machine is required.

Moreover, in mechanical sowing the seeds move from the storage hopper to the seed deposition devices by the force of gravity alone; for this reason, if the seeds are of uneven size and if the forward movement of the machine is not constant or is too fast, in these systems there is an uneven spacing of the seeds.

### SUMMARY OF THE INVENTION

The main objective of the subject matter of the present invention is to overcome the drawbacks of the prior art by designing a precision pneumatic sowing machine that allows the sowing of small pieces of land in a fast and accurate manner, but at the same time without being demanding in terms of the energy required of the operator.

In the scope of the above objective, one purpose of the present invention is to provide a self-propelled sowing machine of compact size.

A further purpose is to devise a sowing machine provided with a precision pneumatic sowing system that is most flexible on the basis of the type of monogerm seed to be laid on the ground, that is, in relation to the size and sowing distance.

Another purpose of the invention is to provide a sowing machine comprising a range of functional devices that make it practical and intuitive to use.

One not least important purpose is to devise a self-propelled sowing machine that can be realized with the usual well-known systems, machineries and equipment.

The above-mentioned objective and purposes, and others that will be better disclosed below, are achieved through the construction of a self-propelled sowing machine with a precision, pneumatic seed deposition system as defined in claim 1. Further details of the machine are defined in the subsequent dependent claims.

### BRIEF DESCRIPTION OF THE FIGURES

Advantages and characteristics of the invention will become more evident from the following description, given by way of non-limiting example, with reference to the enclosed figures, wherein:
- Figure 1 is a perspective view of a self-propelled sowing machine provided with a pneumatic precision seeding system according to the present invention;
- Figure 2 shows an enlarged detail of a sowing machine according to the present invention;
- Figure 3 is a side view of the sowing machine of the previous figures;
- Figure 4 is a perspective view of a detail of the sowing machine according to the present invention;
- Figure 5 shows an enlarged detail of the seeding device provided on the sowing machine according to the present invention.

### DETAILED DESCRIPTION OF THE EMBODIMENTS OF THE INVENTION

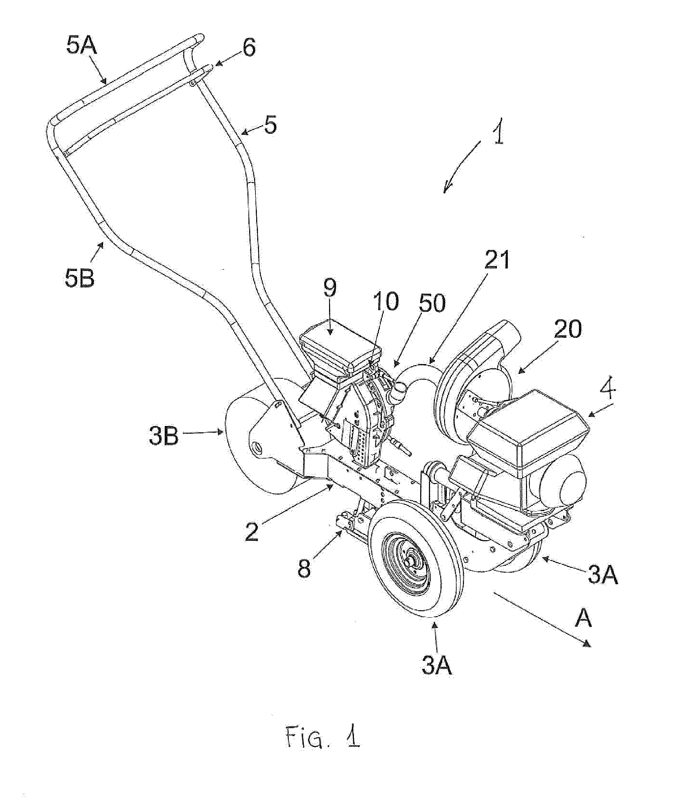

With reference to the previously mentioned figures, in particular to figure 1, a self-propelled sowing machine 1 according to the present invention is shown. Said machine comprises a generally metallic frame 2 to which are connected two or more wheels provided to support and move the machine 1. In particular, preferably said sowing machine is provided with two front drive wheels 3A and a rear wheel 3B that also functions as a soil tamping wheel, relative to the direction of forward travel indicated with the arrow A in figure 1.

Suitable drive means 4 are mounted on the frame to drive the sowing machine 1. In particular, in the embodiment illustrated, said drive means 4 include a conventional internal combustion engine.

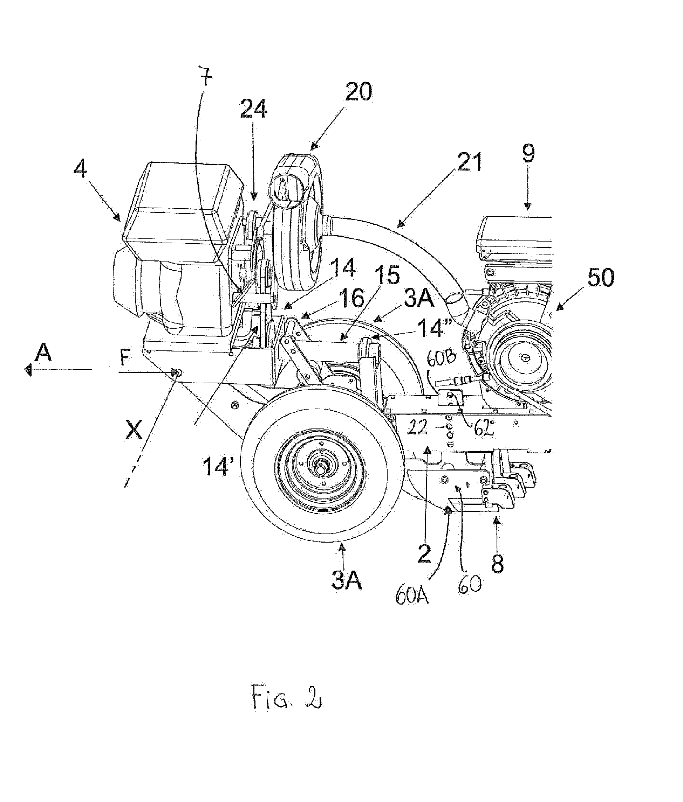

The front wheels 3A receive the movement from the engine 4 through a first belt transmission unit 14 for the forward movement (figure 2), comprising a first pair of idle pulleys and a belt 14' for transferring the motion of the drive shaft to a lower roller 15 and a second pair of idle pulleys with a second belt 14" for transferring the motion from the roller 15 to the wheels 3A. Said first transmission unit 14 is also provided with first clutch means and suitable guard means, and will not be described further in detail, being already of known type. Preferably, said first transmission unit 14 comprises a worm reduction unit that makes it possible to have a high reduction ratio between the engine 4 and the front drive wheels 3A.

In addition, advantageously, said front wheels 3A, preferably with tyres and shaped to guarantee an optimum grip on the ground and a greater travel smoothness are unidirectional and with independent engagement, so as to enable the user to push the sowing machine 1 and to steer it even with the engine shut down.

The engine 4 is pivotally mounted to swing around a front pivot point F: this is particularly advantageous because it allows the engine to oscillate around an axis X orthogonal to the direction of forward travel, thus enabling the machine to best absorb any vibrations transferred from the unevennesses of the ground. Furthermore, advantageously, the radius of rotation of the engine 4 around the axis X is rather high, so that it allows the oscillation with a limited misalignment of the drive pulleys.

Since the sowing machine 1 is steered manually by an operator standing on the ground, it is also provided with manoeuvring means 5 (figure 1), in the shape, for example, of a bent tube, including a handle 5A connected to the frame 2 through two substantially rectilinear parallel arms 5B. Preferably, said manoeuvring means 5 extend from the rear part of the frame 2 of the sowing machine 1, so as to allow the user to steer the machine in the direction of travel A by pushing it, and therefore by standing behind the same. In addition, for easier handling, the inclination of the arms 5B can be adjusted to suit the user.

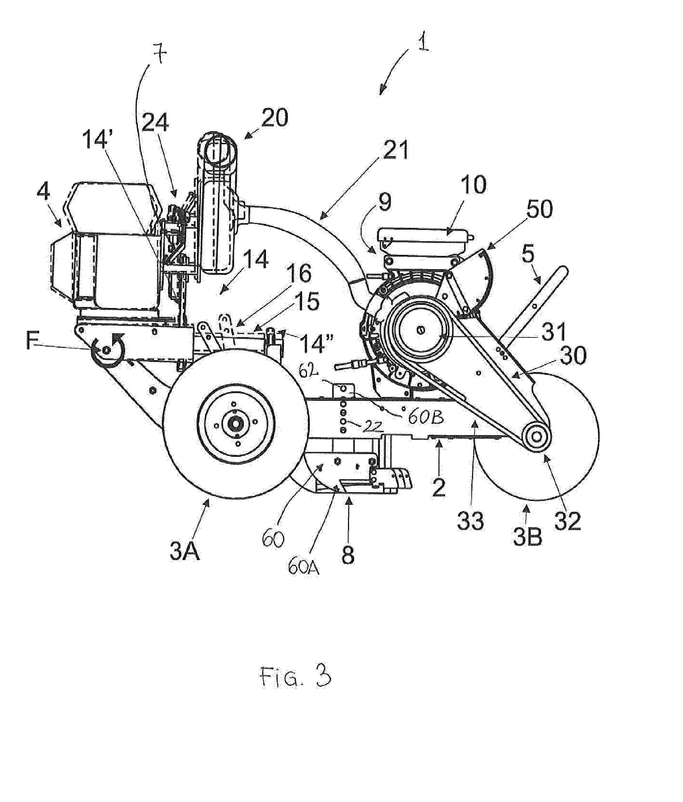

By the handle 5A there is a control lever 6 for controlling the forward drive unit 14 through first known and conventional clutch means. Preferably, for a smoother engagement of the forward drive unit 14, the lever 6 is connected by means of cables to a corresponding roller lever 16 (figures 2 and 3) suitable to be set in an operating position and in an idle position, respectively.

On the self-propelled sowing machine 1 is also mounted a pneumatic precision seeding device 50, connected to the frame 2 with conventional fastening means and preferably made as described in the EP0536543 document, here integrally referred to.

Said precision seeding device 50 includes a perforated disk, having a plurality of round holes, rotating and cooperating on one hand with an air suction device 20, also provided on the frame 2 of the sowing machine 1 as will be explained later, which creates a vacuum through the holes on the disk that holds the seeds that adhere to the disk as far as a release zone, and on the other hand with a mechanical sorting device, which facilitates the selection of a single seed and the return into the container of the seeds drawn up in excess.

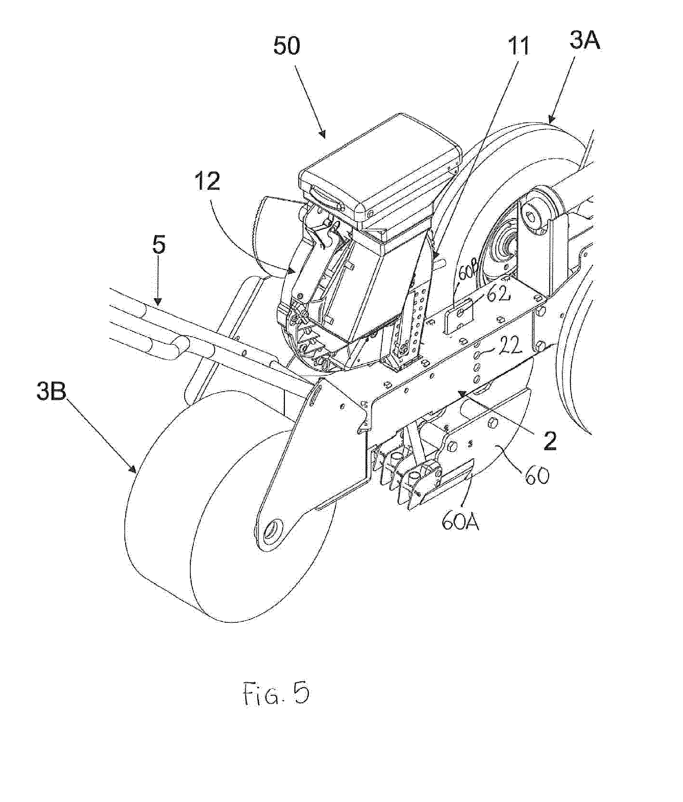

As can be seen in figure 5, said perforated disk is arranged between a seed container 11 and a box-like case 12 defining a suction chamber. The seed container 11 is provided above it with a charging hopper 9 to which is associated a relative cover 10 for charging the seeds, and below it with one of more discharge chutes 8 for placing the seeds on the ground, said chutes being equal in number to the rows that are to be seeded at the same time. Obviously, the faster the rotation of the perforated disk, the closer is the spacing of the seeds placed on the ground.

Said air suction device 20 is of a conventional type and includes an external case, connected to the frame 2 through conventional fastening means, within which is rotatably mounted a suction fan. The fan is mounted on a shaft provided with a pulley, that is connected through a second belt transmission unit 24, and a power take-off from the driven shaft of the engine 4 that also transmits the movement to the front wheels 3A.

A control lever 7, arranged between the engine 4 and the suction device 20, controls said second transmission unit 24 through second known and conventional clutch means.

A suction duct 21 departs from the fan 20 (figure 2) and opens into a chamber formed in the box-like case 12 of the seeding device 50.

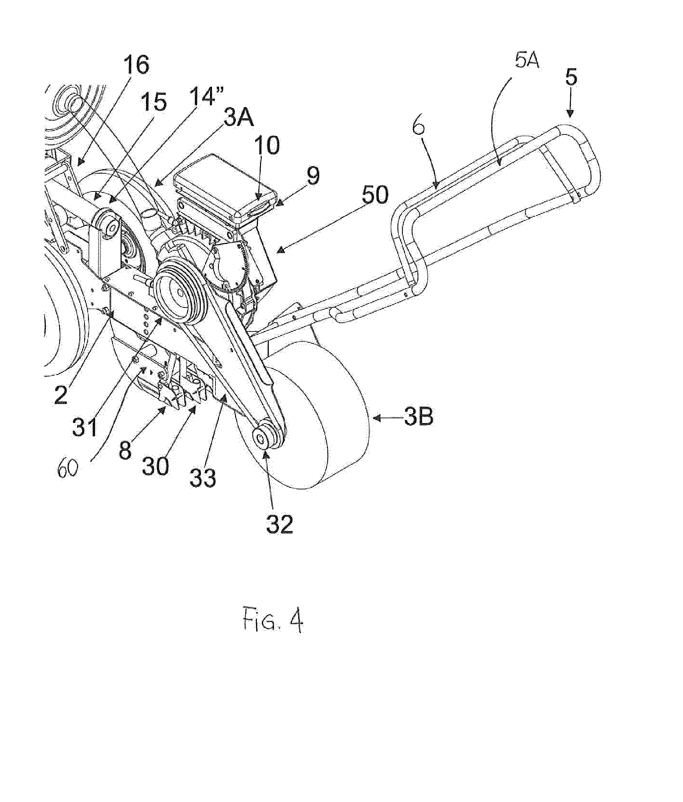

The perforated disk that rotates within the seeding device 50 is driven by the movement of the rear wheel 3B through a third belt transmission unit 30 (figures 3 and 4) that includes a first plurality of driven pulleys 31 of different diameters, integral with the rotating disk, a second plurality of driving pulleys 32, also of different diameters, integral with the rear wheel 3B, and a belt 33.

The shifting of the belt 33 to adjacent pulleys, that is, pulleys having a larger or a smaller diameter, makes it possible to vary the transmission ratio between the two rotating devices and consequently also the seed spacing, without operating on the seed distributing disk. By way of example, in figure 4 are shown two driving pulleys 32 and three driven pulleys 31, which between them make it possible to adjust the belt 33 on six different positions and thus to obtain six different seed spacing distances.

Advantageously, the belt 33 has a toroidal cross section and is made of elastic material so as to make it possible to shift it onto pulleys of different diameter without the use of a belt tensioner.

A furrowing device 60, preferably of "drill coulter" type, is fastened adjustably to the frame 2 of the sowing machine 1: in particular, it includes a protruding element 60A, suitable to break the surface of the ground and penetrate into it so as to open a furrow in which to lay the seeds, and an arm 60B, provided with a plurality of through holes 62 arranged to cooperate, through the insertion of a conventional fastening means, such as a pin, with at least one through hole 22 provided on the frame 2. In this manner, it is thus possible to vertically adjust the position of the furrowing device 60 with respect to the ground, and thus the seed planting depth, to guarantee a uniform sprouting of the crops.

The use of the sowing machine according to the present invention is very simple: the engine 4 is started conventionally by means of a pull cord with a suitable handle (not shown).

Once the engine 4 is in normal running condition, the control lever 6 is pulled toward the handle 5A to engage the first transmission unit 14. The machine then moves in the direction of travel A and the user can easily steer it by means of the handle 5A.

To stop the machine 1, it is sufficient to release the clutch control lever 6: opposing elastic means, for example a spring (not shown), return the lever back to the disengagement position, in which the engine 4 is disconnected from the driving wheels 3A (figure 3 shows, in broken lines, the running position, and, in solid lines, the stop position of the roller lever 16).

In this manner, it is possible to stop the forward travel of the sowing machine 1 while however keeping the air suction device 20 running, and thus to ensure that the seeds are sustained on the perforated disk; consequently, advantageously, it is possible to immediately resume seed planting from the point where it was stopped.

If, instead, the sowing machine 1 is to be moved without planting any seeds, it is sufficient to disconnect the suction device 20 from the engine 4 by acting on the control lever 7 that, as already mentioned, controls the second transmission unit 24. Alternatively, if the machine 1 is simply to be moved from one seeding row to the next one, the sowing process can be momentarily interrupted by lifting the rear wheel 3B off the ground by means of the handle 5A, thereby stopping the movement of the rotating disk of the pneumatic distributor 50 and thus the collection of the seeds from the container 11.

As the sowing machine 1, in its forward motion, cuts a furrow in the ground by means of the furrowing device 60 and lays the seeds down in it, the rear wheel 3B passes exactly over the sown row, compacting and tamping the top layer of the soil to limit the predatory action of insects and birds and avoiding a too rapid absorption of water.

Advantageously, the sowing machine 1 can also be provided with a known system that makes it possible to move the machine with the engine shut off in a direction opposite to the direction of travel A.

From the above, it is evident how a sowing machine 1 according to the present invention achieves the purposes and the advantages initially foreseen.

In fact, a self-propelled machine has been obtained provided with a precision pneumatic sowing device in which, with a single internal combustion engine are controlled, through two transmission units 14, 24 independently operating respectively through first clutch means operated by means of a first control lever 6 and through second clutch means operated by means of a second control lever 7, both the machine drive mechanism that enables its forward travel, and the suction mechanism, that is, the movement of a suction fan cooperating with the sowing device. The dimensions of the machine are thereby reduced, making the same very light and easier to handle.

In addition, being self-powered, the machine can be easily operated with a minimum effort on the part of the user, who is required to simply steer it. The machine is thus perfectly suited to be used in small land plots or in closed spaces, such as greenhouses, making it also possible to considerably shorten the sowing times compared to the use of known hand driven sowing machines.

One not least important aspect of the sowing machine 1 is that it is provided with a series of technical means, described in detail above, that make it very practical and intuitive to use.

Naturally, the present invention is amenable to numerous applications, modifications or variants without thereby departing from the scope of patent protection, as defined by the appended claims.

Moreover, the materials and equipment used to realize the present invention, as well as the shapes and dimensions of the individual components, may be the most suitable to meet the specific requirements.

## Claims

1. Self-propelled seeder (1), driven by a user standing on the ground, comprising:
- a frame (2) to which are associated at least one front wheel (3A) and at least one rear wheel (3B), allowing its motion in the drive direction (A) controlled by manoeuvring means (5),
- a pneumatic precision seeding device (50) mounted on the frame (2) and comprising a seed rotating plate placed between a seed container (11) and a case (12) defining a suction chamber and cooperating, at a side, with an air suction device (20) and, at the other, with a selector suitable to select individual seeds that are released in at least one discharge chute (8) for the deposition of those seeds on the ground,
**characterized in that** it comprises a single driving member (4) fixed to said frame (2) that transfers the movement to said at least one front wheel (3A) by a first transmission group (14) and to said air suction device (20) by a second transmission group (24) separate from said first transmission group (14).

2. Seeder (1) according to claim 1, wherein said first transmission group (14) and said second transmission group (24) are independently operable by first clutch means operated by a first control lever (6) and by second clutch means operated by a second control lever (7).

3. Seeder (1) according to claim 2, wherein said first transmission group (14) comprises a first pair of pulleys and a belt (14') to transfer the motion from the driving shaft to a lower roller (15) and a second pair of pulleys with a second belt (14") for the transfer from said roller (15) to said at least one front wheel (3A).

4. Seeder (1) according to any of the claims from 1 to 3, wherein a suction pipe (21) departs from said suction device (20) and ends at a cave carved from the case (12) of said seeding device (50).

5. Seeder (1) according to any of the claims from 1 to 4, wherein said seed plate receives the rotary motion from said at least one rear wheel (3B) through a third transmission group (30).

6. Seeder (1) according to claim 5, wherein said third transmission group (30) comprises a first plurality of pulleys (31) integral with said seed plate, a second plurality of pulleys (32) integral with said at least one rear wheel (3B) and a belt (33) adjustable between said first and said second plurality of pulleys (31, 32) to select the rotation speed of the seed plate.

7. Seeder (1) according to any of the claims from 1 to 6, wherein a furrower member (60) is fixed in an adjustable manner on said frame (2), said furrower member (60) comprising a protruding element (60A), suitable to create a furrow in the ground, and an arm (60B) provided with a plurality of through holes (62) arranged to cooperate with at least one through hole (22) provided on the frame (2), by inserting a pin, to adjust the depth of the furrow.

8. Seeder (1) according to any of the claims from 1 to 7, wherein said manoeuvring means (5) are arranged on the back of said seeder (1) with respect to the drive direction (A) and comprise a handle (5A) connected to said frame by means of two parallel arms (5B).

9. Seeder (1) according to claims 2 and 8, wherein said first control lever (6) is placed near said handle (5A).
